# EUROPEAN PATENT APPLICATION

(11) **EP 2 180 758 A1**
(43) Date of publication of application: **28.04.2010**
(21) Application number: 08872111.3
(22) Date of filing: 24.11.2008
(51) Int. Cl.: H04W 92/10

(54) **CONFIGURATION METHOD AND DEVICE OF TERMINAL EQUIPMENT**

(30) Priority: 04.02.2008 CN 200810057691
(71) Applicant: Huawei Technologies Co., Ltd., Longgang District Shenzhen Guangdong 518129 (CN)
(72) Inventor: CUI, Shouling c/o Huawei Technologies Co.Ltd., Longgang District 518129, Shenzhen (CN); CHAI, Xiaoqian c/o Huawei Technologies Co.Ltd., Longgang District 518129, Shenzhen (CN); LI, Kepeng c/o Huawei Technologies Co.Ltd., Longgang District 518129, Shenzhen (CN)
(74) Representative: Kreuz, Georg Maria
(86) International application number: PCT/CN2008/073173
(87) International publication number: WO 2009/097726

(57) **Abstract**

A method and an apparatus for configuring a terminal device are disclosed herein. The method includes: receiving a configuration package that carries customized configuration information; and installing the configuration package according to the customized configuration information. The apparatus includes: a receiving module, adapted to receive a configuration package that carries customized configuration information; and an operating module, adapted to install the configuration package according to the customized configuration information. In the embodiments of the present invention, a configuration package carries the customized configuration information about whether to set the configuration package to the non-modifiable state, whether to set the configuration package to the active state, and whether to set the configuration package to default, thus configuring and managing customized properties of the terminal through the network.

## Description

### FIELD OF THE INVENTION

The present invention relates to mobile communication, and in particular, to a method and an apparatus for configuring a terminal device.

### BACKGROUND

Device Management (DM) specifications provide a cost-effective solution to third-party management and setting the environment and configuration information of terminal devices (such as mobile terminal and the functional objects in the terminal) in a wireless network, with a view to solving the problems of terminal device in the operation process, install and upgrade software and hardware in the Over The Air (OTA) mode, and provide more humanized and customized services to improve the user experience. The third party may be a mobile operator, a service provider, or an information management department of a partner.

With the development of data services, more and more contents need to be delivered through a mobile network to mobile terminals, and the Push OTA and the Download OTA (DL OTA) content transmission mechanisms in the mobile network are developing. The Push OTA protocol is a wireless content transmission protocol, which enables a server to push contents to a mobile terminal. The DL OTA protocol is a flexible downloading protocol which enables a server to push contents to a mobile terminal and enables a terminal to pull contents to a local directory.

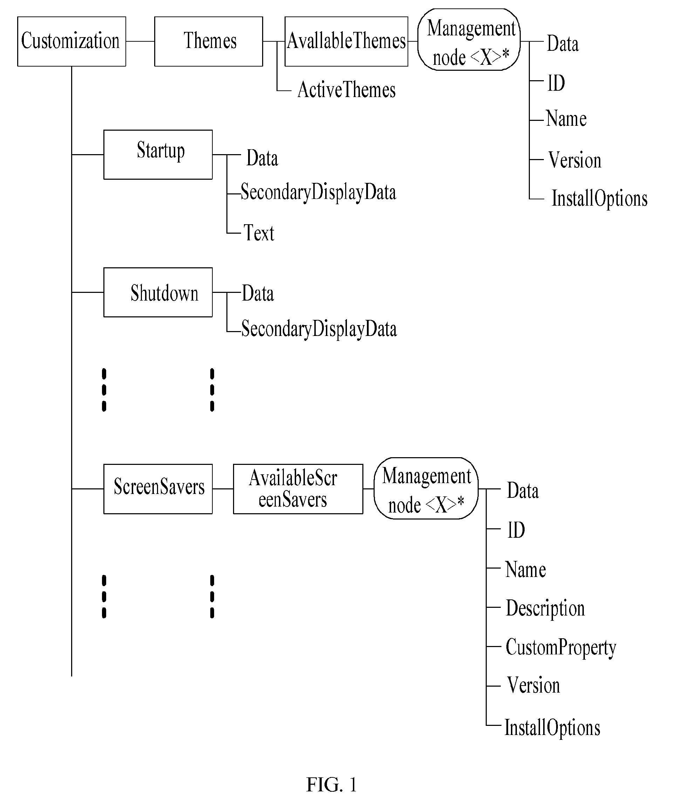

Each terminal that supports DM has a management tree. The management tree stores Management Objects (MOs). An MO is a terminal's management interface to a Device Management Server (DMS). The DMS manages terminals by issuing commands of operating the MOs in the terminal management tree to the terminal. FIG. 1 is a layout of MOs which perform customized configuration for a terminal in the prior art. The configuration flow based on the MOs is as follows (supposing that the DMS delivers and configures the ScreenSaver).

The DMS adds a management node and its subnodes which perform customized configuration for the terminal ScreenSaver under the "Customization/ScreenSavers/AvailableScreenSavers" node of the terminal management tree.

The DMS uses a Replace command to deliver the configuration files of the ScreenSaver to the Data node, and uses the Replace command to deliver the configuration properties of the configuration files to the InstallOptions node.

The DMS uses the Replace command to modify the value of the "Customization/ScreenSavers/ActiveSc" node to the value of the management node.

The terminal activates the corresponding ScreenSaver according to the value of the ActiveSc.

The prior art has the following defects:
unable to lock or activate/deactivate a configuration element, or set a configuration element as a default option;
unable to lock or activate/deactivate a configuration package, or set a configuration package as a default option; and
unable to deliver a configuration package or configuration element in non-DM modes.

### SUMMARY

The present invention provides a method and an apparatus for configuring a terminal device to enable a terminal to operate a configuration package and/or a configuration element according to the configuration information in the received configuration package delivered by any downloading mechanism.

According to the first aspect of the invention the method for configuring a terminal device includes:
receiving a configuration package that carries customized configuration information; and
installing the configuration package according to the customized configuration information.

According to the second aspect of the invention the apparatus for configuring a terminal device includes:
a receiving module, adapted to receive a configuration package that carries customized configuration information; and
an operating module, adapted to install the configuration package according to the customized configuration information.

In the present invention a configuration package carries the customized configuration information about whether to set the configuration package to the non-modifiable state, whether to set the configuration package to the active state, and whether to set the configuration package to default, thus configuring and managing customized properties of the terminal through the network is realized.

### BRIEF DESCRIPTION OF THE DRAWINGS

FIG. 1 is a layout of MOs which perform customized configuration for a terminal in the prior art;
FIG. 2 is a flowchart of a method for configuring a terminal device in the first embodiment of present invention;
FIG. 3 shows an XML-based organization mode of configuration package properties and configuration element properties in the first embodiment of the terminal device configuration method under the present invention;
FIG. 4 shows an organization mode of MOs of configuration packages and configuration elements in the first embodiment of the terminal device configuration method under the present invention;
FIG. 5 shows a configuration package management subtree on a terminal MO in the first embodiment of the terminal device configuration method under the present invention;
FIG. 6 is a flowchart of a method for configuring a terminal device in the second embodiment of present invention;
FIG. 7 shows state transition corresponding to management operations for configuration packages in the second embodiment of the terminal device configuration method under the present invention;
FIG. 8 shows state transition corresponding to management operations for configuration elements in the second embodiment of the terminal device configuration method under the present invention;
FIG. 9 shows a structure of an apparatus for configuring a terminal device in the first embodiment of present invention; and
FIG. 10 shows a structure of an apparatus for configuring a terminal device in the second embodiment of present invention.

### DETAILED DESCRIPTION

The embodiments of the present invention are detailed below by reference to accompanying drawings.

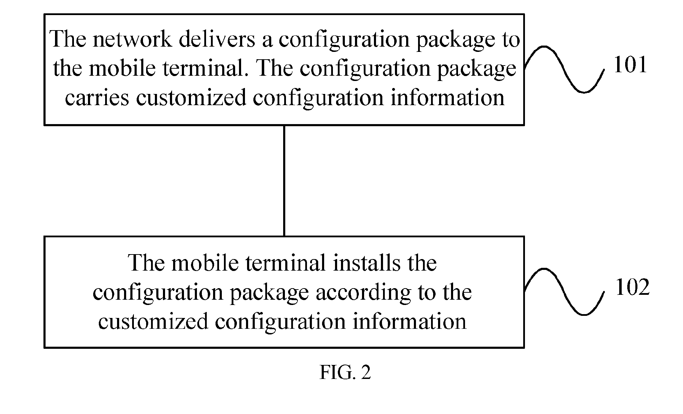

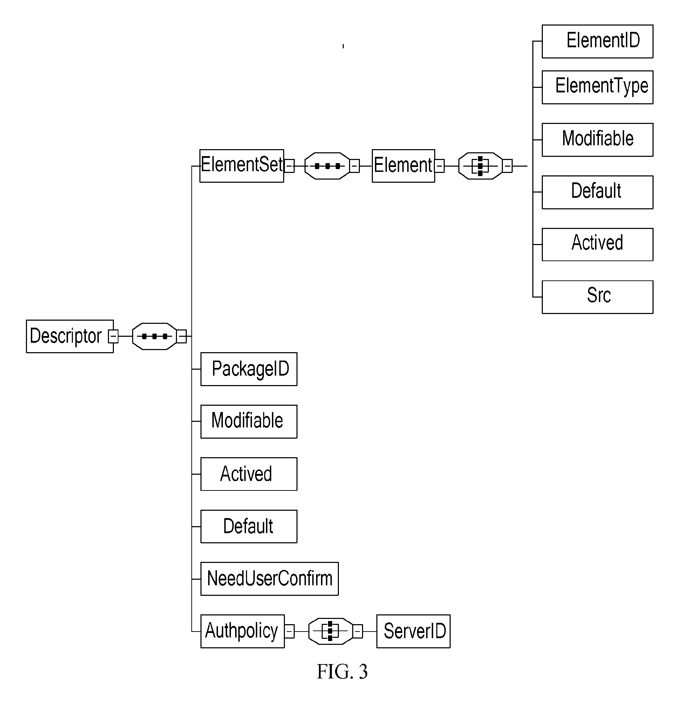

FIG. 2 is a flowchart of a method for configuring a terminal device in the first embodiment of present invention. This embodiment pertains to configuration of customized configuration items. The configuration process includes the following steps:
Step 101: The network delivers a configuration package to the mobile terminal. The configuration package carries Look and Feel Customization (LFC) configuration information. The configuration package is composed of a descriptive file (including configuration package properties and configuration element properties) and a configuration content file. The descriptive file is optional but the configuration content file is mandatory in the configuration package. The configuration package properties include one or more of the following properties: an ID of the configuration package (PackageID), an indicator that indicates whether to set the configuration package to "non-modifiable" (Modifiable), an indicator that indicates whether to set the configuration package to "an active state" (Actived), an indicator that indicates whether to set the configuration package to default (Default), an indicator that indicates whether user confirmation is required (NeedUserConfirm), an authentication policy (AuthPolicy), and an aggregate of elements (ElementSet). One or more server IDs may exist under the "AuthPolicy" property, and the "AuthPolicy" may also be a value. The ElementSet may include one or more elements, and each element has one or more of the following properties: an ID of the configuration element (ElementID), an identifier of configuration element type (ElementType), an indicator that indicates whether to set the configuration element to "non-modifiable" (Modifiable), an indicator that indicates whether to activate the configuration element (Actived), an indicator that indicates whether to set the configuration element to default (Default), and source file (src). FIG. 3 shows an Extensible Markup Language (XML)-based organization mode of configuration package properties and configuration element properties in the first embodiment of the terminal device configuration method under the present invention. The elements are described below:

| Element | Type | Function |
|---|---|---|
| Descriptor/PackageID | String | Unique identifier of the package, provided by the network (such as content server or LFC management server) |
| Descriptor/Modifiable | Boolean | This element indicates whether to set the configuration package as non-modifiable (namely, the terminal is unable to update it) after the configuration package is installed. "Install" refers to installation or deployment, including copying of a file to a proper directory. Setting a configuration package to "non-modifiable" means the configuration package is not updateable, but may be activated/deactivated, locked/unlocked, or deleted. Setting all configuration elements in a configuration package to "non-modifiable" means that the configuration elements in the configuration package are not updateable, but may be activated/deactivated, locked/unlocked, or deleted |
| Descriptor/Actived | Boolean | This element indicates whether to activate the configuration package after the configuration package is installed. Activating a configuration package refers to activating all configuration elements in the configuration package. Activating a configuration element refers to setting the current value of the configuration item to this configuration element. Deactivating refers to modifying the current value of the configuration item to the default configuration element or the previous activation object |
| Descriptor/Default | Boolean | This element indicates whether to set the installed configuration package to default. Setting the configuration package to default refers to setting all configuration elements in the configuration package to the default configuration element of the corresponding configuration item. A default configuration element of the configuration item refers to the default value of the configuration item |
| Descriptor/NeedUserCon firm | Boolean | In the installation process, this element indicates whether to allow user interaction. The value of this element comes in many modes |
| Descriptor/AuthPolicy | -- | This element is a policy of authenticating rights of subsequent management. The function of this element is to allocate access control rights to the management server. One or more management server IDs may exist under this element |
| Descriptor/AuthPolicy/Se rverID | -- | Subsequent management server ID |
| Descriptor/ElementSet | -- | Configuration element set, under which one or more configuration elements exist as subelements |
| Descriptor/ElementSet/Element | -- | Configuration element |
| Descriptor/ElementSet/El ement /ElementID | string | This element is a configuration element ID provided by the network. The network entity may be but is not limited to a content server or an LFC server |
| Descriptor/ElementSet/El ement /ElementType | string | This element identifies the LFC configuration item of the terminal. For example, Screen Saver and wallpaper belong to one configuration item |
| Descriptor/ElementSet/El ement /Modifiable | Boobean | This element indicates whether to set the element to "non-modifiable" |
| Descriptor/ElementSet/El ement /Actived | Boobean | This element indicates whether to set the element to "activated" |
| Descriptor/ElementSet/El ement /Default | Boobean | This element indicates whether to set the element to default |
| Descriptor/ElementSet/El ement /Src | -- | This element indicates the content file of the element. It may be the location of the configuration element file, or the configuration element file itself |

The data structure of the configuration package is described below:

A configuration package may include a Descriptor file and one or more configuration content files. The configuration content file may be a theme package, picture, or ring tone file, which is suitable for being installed on a mobile station or configuring the mobile station. The quantity of Descriptor files in the configuration package is 1 or 0. If no Descriptor element exists, the configuration content file is an installable configuration package.

The value of the Descriptor/NeedUserConfirm element may be "True" or "False". "True" indicates that user confirmation is required. "False" indicates that no user confirmation is required. The value of this element may also be a series of values, for example:

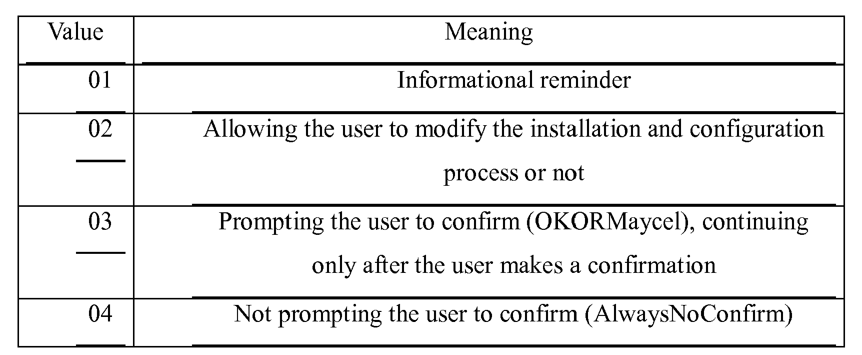

The subelements in the "AuthPolicy" may be one or more management server IDs.

If there are multiple ServerIDs, the AuthPolicy may be expressed in two modes:

```
       <AuthPolicy>
       <ServerID>ServerA</ServerID>
       <ServerID>ServerB</ServerID>
       </AuthPolicy>
       or the values of ServerID are connected through "+", for example:
       <AuthPolicy>
       <ServerID>ServerA+ServerB</ServerID>
       </AuthPolicy>
       The ServerID value "*" indicates any server, for example:
       <AuthPolicy>
       <ServerID>*</ServerID>
       </AuthPolicy>
```

The "Descriptor/ElementSet/Element/src" element may indicate the location of the configuration content file in the package, or may be the configuration content file itself. When the "src" element serves as a content file identifier, the element may be the Uniform Resource Identifier (URI) in the configuration package in the configuration content file; or may be a filename of the configuration content file; or may be an XML file set which includes one or more files, for example:

```
       URI: <src>./theme.thm </src>
       Filename: <src>wallpaper.jpg </src>
       File set:
       <src>
       <fileset>
       <files>./wall.jpg</files>
       <files>./wall2.jpg</files>
       </fileset>
       </src>
```

When the src element is the configuration content file itself, the element includes the Meta information and the Data information of the configuration content file. The Meta information is the filename and type of the configuration content file; and the Data information is the data (such as binary data) of the configuration content file, for example:

```
       <src>
       <Meta>
         <Name>wallpaper .jpg</Name>
         <Type> image/jpeg</Type>
       </Meta>
       <Data >fag3134fdsa</Data> <!--- configuration content file --->
       </src>
```

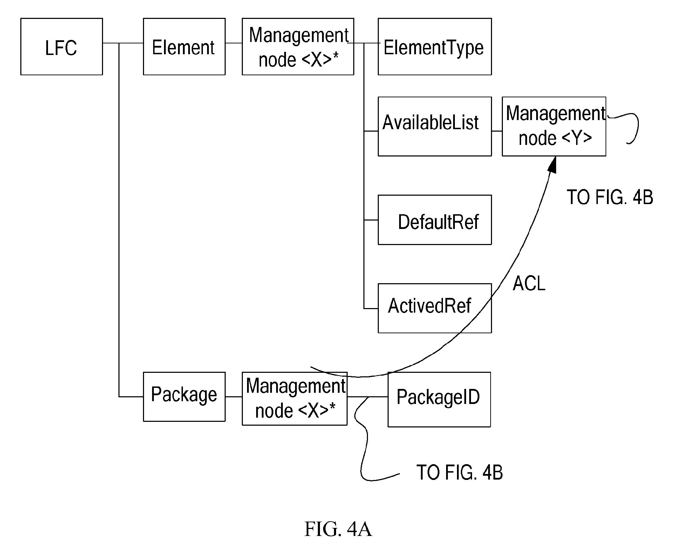

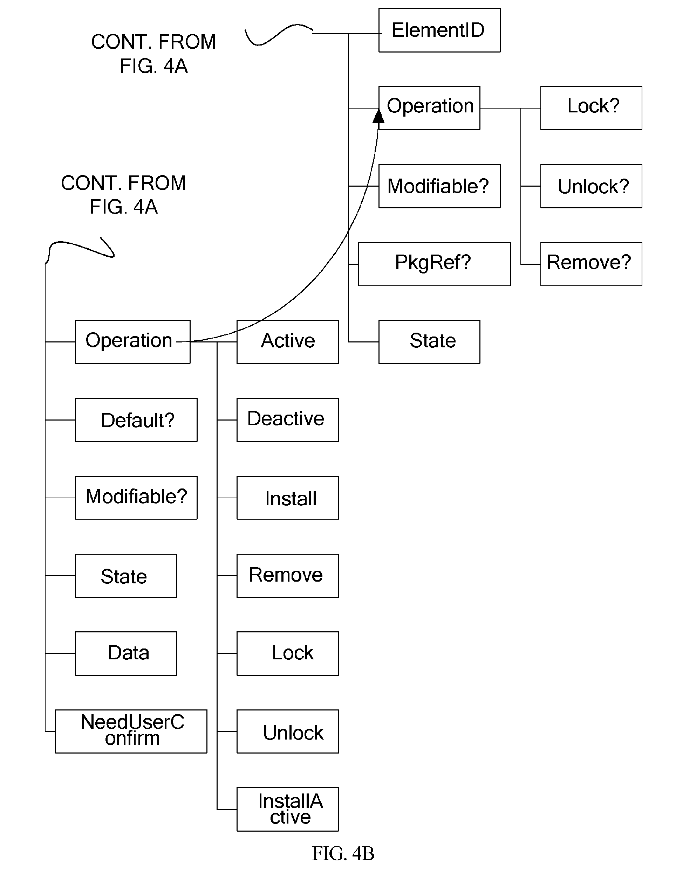

FIG. 4 shows an organization mode of MOs of configuration packages and configuration elements in the first embodiment of the terminal device configuration method under the present invention. The key nodes are described below:

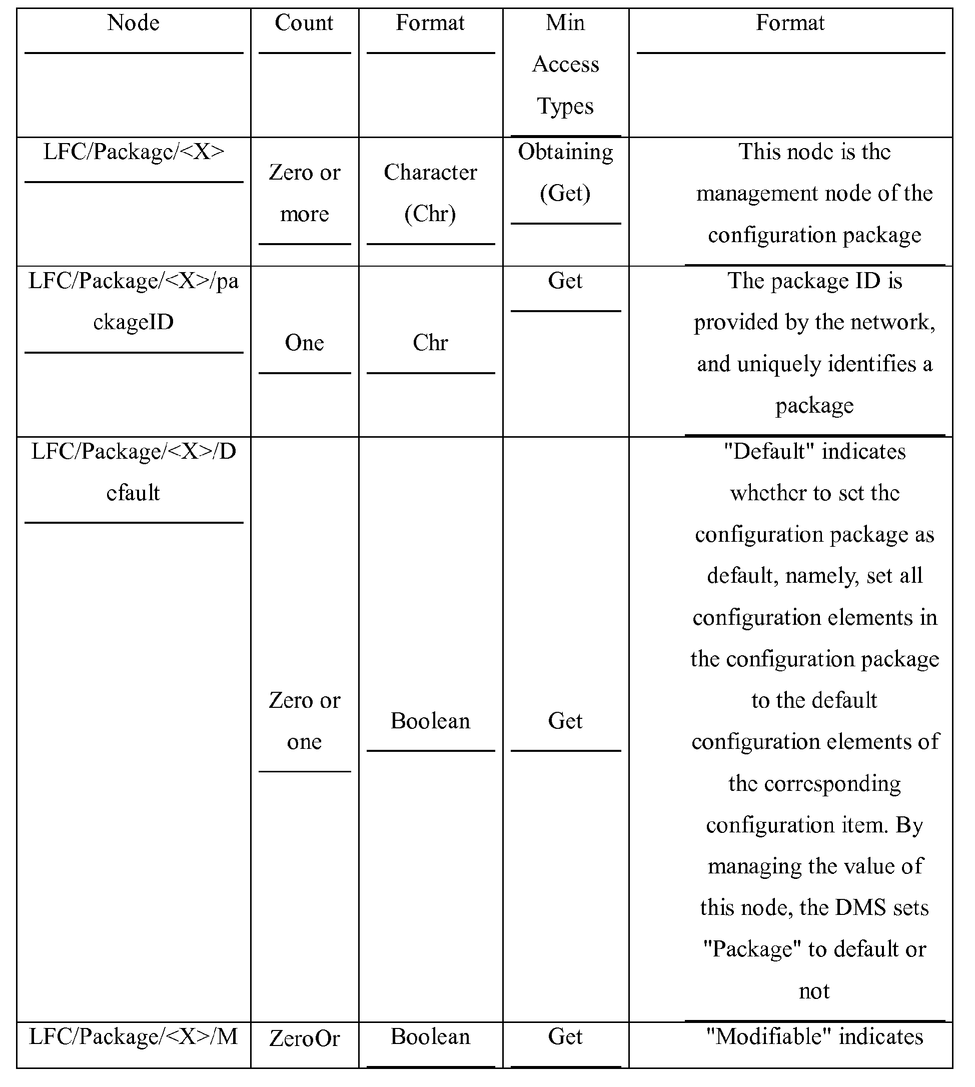

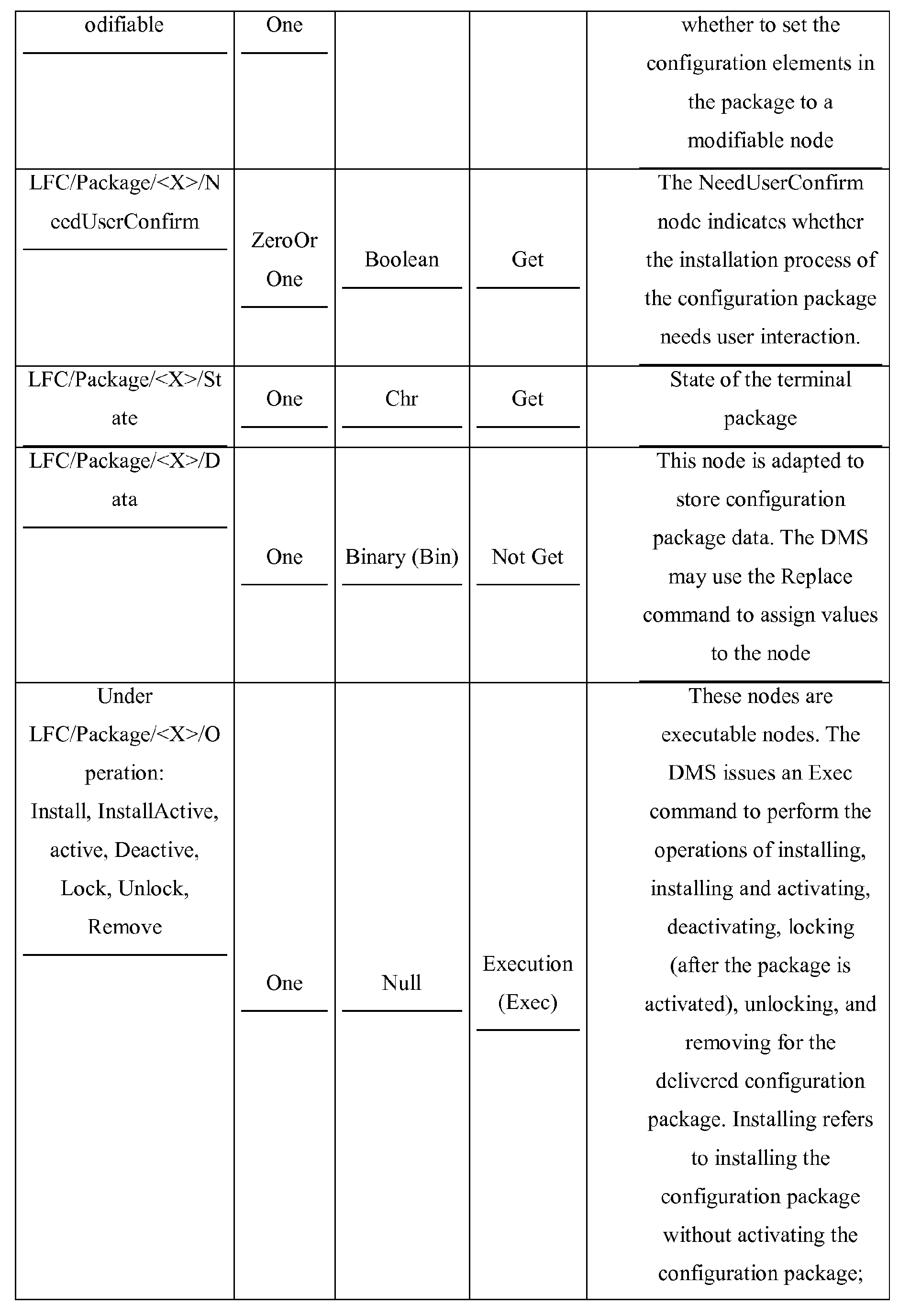

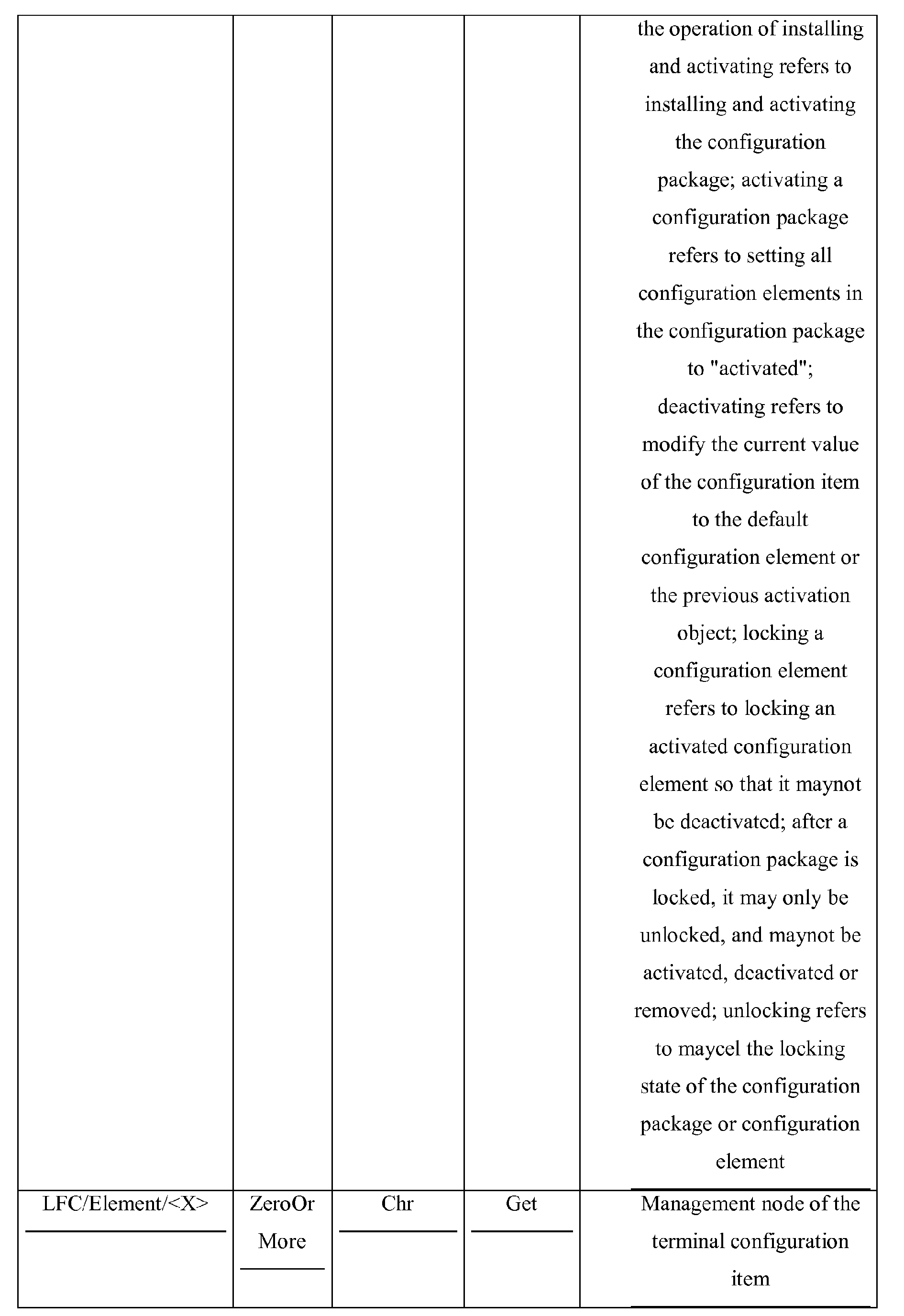

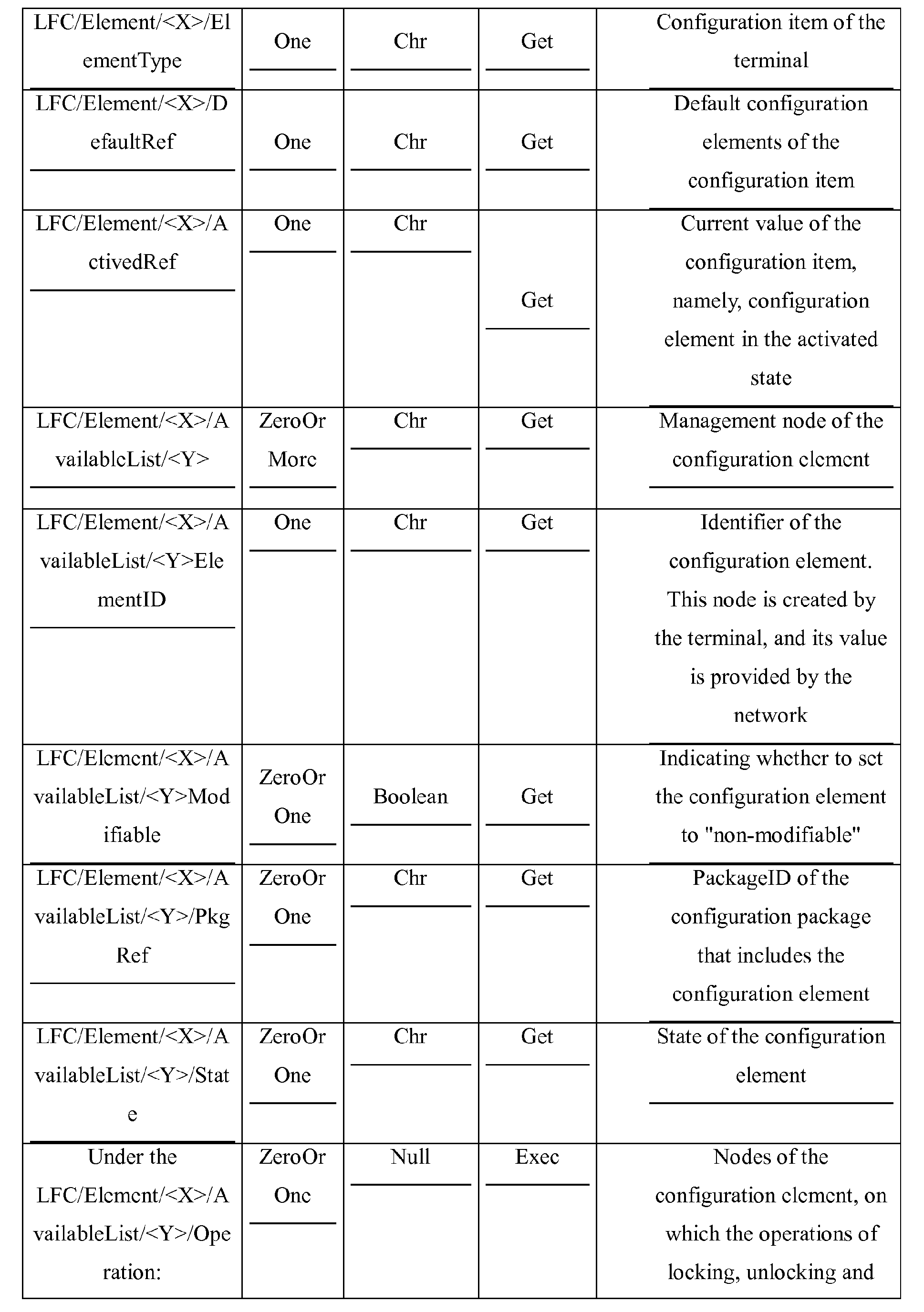

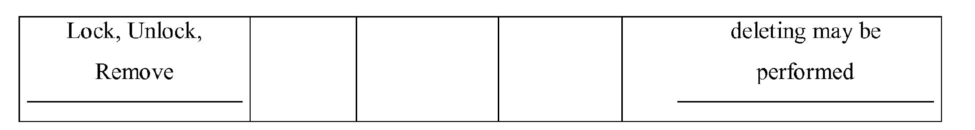

The key nodes are further described below.

The value of the "NeedUserConfirm" node may be "true" or "false", or a series of values, for example:

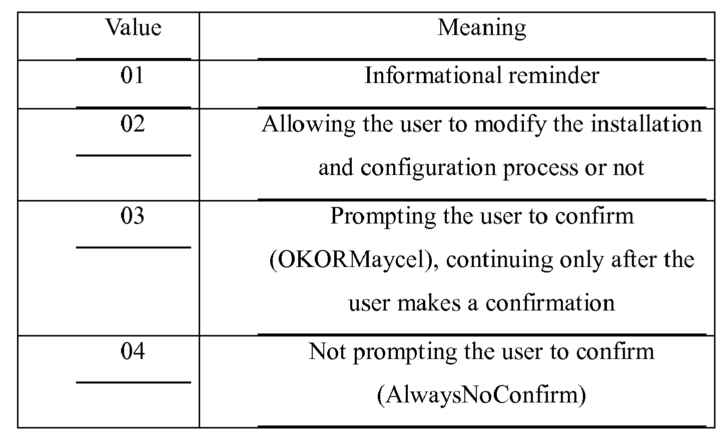

The "LFC/Package/<X>/State" node indicates the state of the configuration package of the terminal, and the "LFC/ Element/ <X>/ AvailableList/ <Y>State" node indicates the state of the configuration element. The values of the two State nodes are as follows:

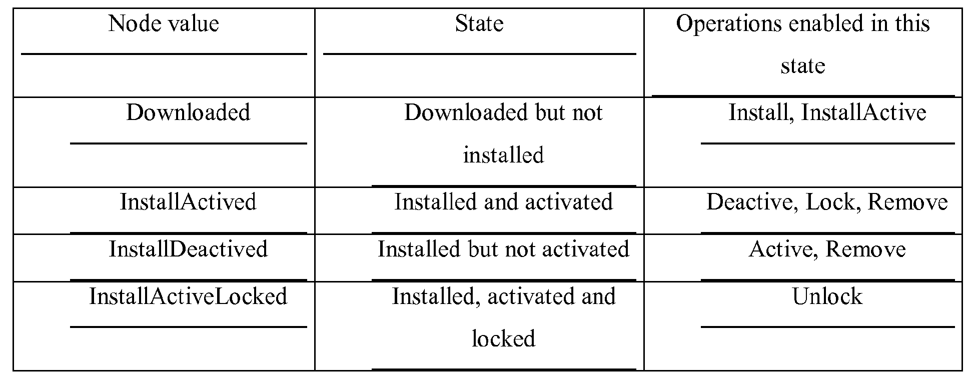

The state of a configuration element is: InstallActived, InstallDeactived, or InstallActiveLocked.

The network encapsulates the LFC configuration information and the configuration content file into a configuration package, and delivers the package to the mobile terminal. The method for encapsulating a configuration package is: According to the format of the descriptive file (Descriptor) in FIG. 3, all properties under the Descriptor are organized into a descriptive file, and then the specific configuration content file and the descriptive file are encapsulated into a package. Alternatively, the configuration content file is put into a descriptive file for packaging.
The two packaging methods are detailed below:

Method 1: The descriptive file is independent of the configuration content file. The descriptive file and the configuration content file are encapsulated into an LFC configuration package. An instance of a descriptive file organized according to the format in FIG. 3 is as follows:

```
       <Package>
       <PackageID>pkg123</PackageID>
       <Modifiable>true<Modifiable>
       <Actived>true</Actived>
       <Default>true</Default>
       <ElementSet>
       <Element>
       <ElementType>wallpaper</ElementType>
       <ElementID>cp.wallpaper.001 </ElementID>
       <Actived>true</Actived>
       <src>./wall.jpg</src> <!-relative path of the content file as against the descriptive file
       -->
       </Element>
       </ElementSet>
       </Package>
```

Packaging refers to encapsulating the descriptive file and the content file into a package resolvable by the terminal, for example, compressing a descriptive file and a content file into a ZIP file.

Method 2: The configuration content file is put into the descriptive file for packaging. Method 2 differs from method 1 in that: The value of the <Package>/<ElementSet>/<Element>/<src> element in the descriptive file in method 1 is a relative path of the specific content file as against the descriptive file; the value of this element in method 2 is the content of the content file (optionally including <Meta> property). Given below is an instance of the element:

```
       <src> <!-The following is a content file and its meta property -->
       <Meta>
       <Name>wallpaper1.jpg</Name>
       <Type> image/jpeg</Type>
       </Meta>
       <Data >fag3134fdsa</Data> <!--- content file --->
       </src>
```

The network delivers a configuration package to the mobile terminal through various downloading mechanisms. Supposing that the downloading mechanisms are PUSH OTA, DL OTA, and OMA DM protocols, the downloading process is as follows:

### 1. An LFC configuration package is delivered to the terminal in the PUSH mode.

First, an ApplicationID is registered for the LFC client for identifying the LFC client program. This ApplicationID is exemplified below:

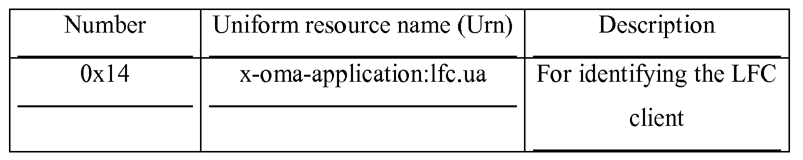

The process of binding to the push OTA includes: (A) initiating a connection; and (B) delivering the content.

### (A) Initiating a connection

### a. The PUSH OTA is based on the Wireless Session Protocol (WSP).

The Push Proxy Gateway (PPG) sends a Session Initiation Request (SIR) to the Session Initiation Application (SIA) of the client. The X-Wap-Application-Id parameter value in the SIR is an ApplicationsID of the LFC, and the SIA is identified by the ApplicationID.

After receiving the SIR, the client creates a connection with the PPG. The connection needs to carry an Accept-Application parameter. The accept-application parameter carries the ApplicationID, telling the PPG that the application which initiates the connection is the LFC client program, as detailed below:

```
   Accept-Application = "Accept-Application" ":" app-ranges
   App-ranges = ( #urn:x-wap-application:lfc.ua)
```

### b. The PUSH OTA is based on the HyperText Transport Protocol (HTTP).

When getting registered onto the PPG, the terminal uses the X-Wap-Push-Accept-AppID item in the CPIHeader parameter to register the ApplicationID of the LFC client to the PPG. The PPG buffers the Capability and Presence Information (CPI) of the terminal.

The PPG sends an SIR to the SIA of the terminal. The SIA is identified by the ApplicationID.

After receiving the SIR, the client sets up a session connection with the PPG.

### (B) Delivering the content

### a. The PUSH OTA is based on WSP

After setting up a connection with the terminal, the PPG uses the "push body" parameter in the PUSH operation primitive to deliver the configuration package of the LFC.

### b. The PUSH OTA is based on HTTP.

The PPG uses the "post" request in the HTTP protocol to deliver the LFC configuration package to the LFC client.

### 2. An LFC configuration package is delivered to the terminal in the DL OTA mode.

First, a Multipurpose Internet Mail Extensions (MIME) type is registered for the LFC configuration package, for example:

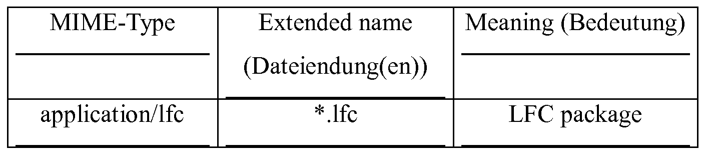

The detailed steps are as follows:
A. The network (a content server or an LFC server or a Download server) generates a Download Descriptor (DD) file for the LFC configuration package. The "./product/mediaObject/type" element value in the DD file is set to the MIME type value of the LFC configuration package.
B. The Download client obtains the DD, and obtains the LFC configuration package data according to the URI indicated by the DD file.
C. After obtaining the LFC configuration package, the Download client obtains the MIME Type of the configuration package from the "./product/mediaObject/type" element value of the "Download Descriptor.xml", and refers the configuration package to the corresponding processing program according to the type indicated by the MIME Type (for example, refers the configuration package to the LFC client).

### 3. An LFC configuration package is delivered to the terminal in the DM mode.

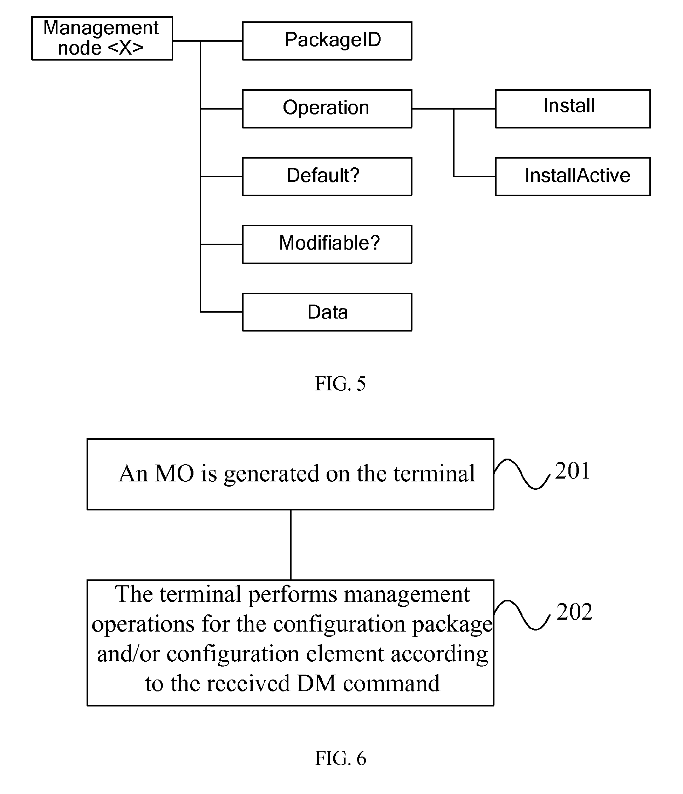

The DMS creates a management subtree of the configuration package on the MO of the terminal. The management subtree is a simplified version of the configuration package management subtree on the configuration package and the configuration element MOs (as shown in FIG. 4). FIG. 5 shows a configuration package management subtree on a terminal MO in the first embodiment of the terminal device configuration method under the present invention. Among the nodes of the configuration package management subtree, <X>, Data, and PackageID are mandatory, and other nodes are optional, as detailed below:

The DMS creates a configuration package management node <X> on the terminal management tree, creates a "Data" node under <X>, and delivers the configuration package data to the "Data" node, for example, through a Replace command.

The DMS may manage the PackageID node created under the node <X>, and assign a value to it. Specifically, when creating the node, the DMS uses an Add command to carry the value of the PackageID, or uses a Replace command to deliver the value of the PackageID.

The DMS may manage the "Modifiable" node under node <X>, and assign a value to it. Specifically, when creating the node, the DMS uses an Add command to carry the value of "Modifiable", or uses a Replace command to deliver the value of the "Modifiable" node.

The DMS may manage the "Default" node under node <X>, and assign a value to it. Specifically, when creating the node, the DMS uses an Add command to carry the value of "Default", or uses a Replace command to deliver the value of Default.

Step 102: The mobile terminal installs the configuration package according to the customized configuration information.

The installation of the configuration package varies with the delivery mode. Supposing that the configuration package is delivered in a non-DM mode and a DM mode respectively, the installation process is detailed below:

### 1. Installing a configuration package delivered in a non-DM mode

After receiving the configuration package delivered in the non-DM mode, the LFC client resolves a Descriptor file, and then installs the LFC configuration package as indicated by the Descriptor file, as detailed below:
If the resolved Descriptor element includes a PackageID element, the terminal records the value of the PackageID.
If the resolved Descriptor element includes a Modifiable element and the value of the Modifiable element is "true", the LFC client sets all elements in the configuration package to "non-modifiable" after installing the configuration package; if the value of the Modifiable element is "false", the LFC client does not perform such setting.
If the resolved Descriptor element includes an Actived element and the value of the Actived element is "true", the LFC client activates all configuration elements in the configuration package after installing the configuration package, namely, sets the configuration element to the current value of the configuration item; if the value of the Actived element is "false", the LFC client sets the configuration package to "Inactive" after installing the configuration package, and the configuration package is in the inactive state.
If the resolved Descriptor element includes no Actived element, the LFC client does not activate the configuration elements in the configuration package after installing the configuration package, or, the terminal decides whether to activate all elements in the configuration package.
If the resolved Descriptor element includes a Default element and the value of the Default element is "true", the LFC client sets all elements in the configuration package to the default value of the corresponding configuration item of the element after installing the configuration package; if the value of the Default element is "false", the LFC client does not perform such setting.
If the resolved Descriptor element includes a NeedUserConfirm element, the terminal sets whether the configuration package installation requires confirmation of the user according to the value of the NeedUserConfirm element: If the value of the NeedUserConfirm element is "true", the installation of the configuration package and the configuring of the configuration element depend on confirmation of the user; if the value of the NeedUserConfirm element is "false", the installation of the configuration package and the configuring of the configuration element require no confirmation of the user. The NeedUserConfirm element may have other values such as Informational, Changeable, OKORMaycel, or AlwaysNoConfirm (whose meanings are similar to those in the structure description given above), and the terminal provides the corresponding User Interface (UI) interaction for the user according to the meanings of the value.
If the resolved Descriptor element includes no ElementSet element, the configuration package is installed as an installation package.
If the resolved Descriptor element includes an ElementSet element and the ElementSet element includes one or more "Element" elements, and each "Element" element corresponds to a configuration element, the configuration element configures the configuration element according to the value of the subelement under the "Element" element, as detailed below:
If the "Element" element includes an "ElementID" element, the terminal records the value, and makes it correspond to the specific configuration element.
If the "Element" element includes an ElementType element, the LFC client installs or deploys the configuration content file to the configuration item corresponding to the ElementType according to the value of the "src" element; if the "src" element is an identifier of the configuration file, the terminal finds the corresponding configuration content file according to the identifier, and installs the configuration content file; if the "src" element is the Meta information and Data content of the configuration content file, the LFC client installs the configuration content file under the "src" element directly.
If the "Element" element includes a Modifiable element and the value of the Modifiable element is "false", the terminal sets the corresponding configuration element to "non-modifiable" after installing the configuration package. The corresponding configuration element refers to the configuration element under the "src" element.
If the "Element" element includes an Actived element and the value of the Actived element is "true", the terminal activates the corresponding configuration element after installing the configuration package, namely, sets the configuration element to the current value of the configuration item; if the value of the Actived element is "false", the terminal keeps the "Inactive" state of the installed configuration element. The corresponding configuration element refers to the configuration element under the "src" element.
If a Default element exists under the "Element" element and the value of the Default element is "true", the terminal sets the corresponding configuration element to the default value of the corresponding configuration item after installing the configuration package. The corresponding configuration element refers to the configuration element under the "src" element.
If the ElementSet element includes multiple "Element" element, the foregoing process needs to be repeated.
After receiving the configuration package delivered in the non-DM mode, the LFC client installs the configuration package directly if the LFC configuration package includes no Descriptor file.

### 2. Installing a configuration package delivered in a DM mode

The DMS may add an Operation/Install node on the MO configured on the terminal management tree, and issue an Exec command to the Install node, thus instructing the terminal to install the configuration package.

The DMS may add an Opertion/InstallAcitve node on the MO configured on the terminal management tree, and issue an Exec command to the InstallActive node, thus instructing the terminal to activate the configuration package.

After receiving the foregoing commands, the terminal executes the installation and activation operations respectively.

### A. Installation process

First, the terminal checks the MO of the configuration package. That is, when the network delivers the configuration package in the DM mode, the terminal checks whether the management node of the configuration package includes a Default node and a Modifiable node. If the MO includes a Default node, the terminal configures the configuration package by using the value of the Default node on the MO no matter whether the Descriptor file in the configuration package includes a Default element. If the value of the Default node is "true", the terminal sets all elements in the configuration package to the default configuration elements of the corresponding configuration item. If the value of the Default node is "false", the terminal does not perform such setting. If the MO includes a Modifiable node, the terminal configures the configuration package by using the value of the Modifiable node on the MO no matter whether the Descriptor file in the configuration package includes a Modifiable element. If the value of the Modifiable node is "true", the terminal sets all elements in the configuration package to "non-modifiable" after installing the configuration package. If the value of the Modifiable node is "false", the terminal does not perform such setting. If the MO management node of the configuration package includes neither Default node nor Modifiable node, the terminal performs the setting according to the element values in the Descriptor file, and the detailed mode is similar to that described in the installation method applied when the configuration package is delivered in the non-DM mode.

Subsequently, the terminal copies the elements (specific elements or theme package) in the package into the terminal element library, and the terminal may detect and use the look-and-feel element.

### B. Activation process

If the value of the Actived node under the management node <X> of the configuration package is "true", or if the management node <X> of the configuration package includes no Actived node, the terminal activates all configuration elements in the configuration package after installing the configuration package.

FIG. 6 is a flowchart of a method for configuring a terminal device in the second embodiment of present invention. This embodiment pertains to management on the configured configuration items, configuration packages and configuration elements of a terminal. The management process includes the following steps:
Step 201: Before the management, MOs need to be added onto the terminal management tree first.

The MOs, the management nodes under the Package node on the MO, and the subtrees may be generated by the terminal or generated by the DMS. The nodes under the Element node on the MO are generated by the terminal.

The method for adding an MO on the terminal management tree is performed in two scenarios: The delivery of the configuration package is based on the DM protocol, and the delivery of the configuration package is based on other downloading mechanisms.

### 1. The configuration package is delivered by the DMS through a DM protocol.

Like the MOs described above, the DMS adds the Package/<X> node and the Package/<X>/Data node on the terminal management tree. The PackageID node may be generated by the DMS or the terminal. Other nodes under the Package/<X> (for example, Default, Modifiable, and State) and the executable subnodes under the Operation node may be generated by the terminal or the DMS.

### 2. The configuration package is delivered through other downloading mechanisms.

When the configuration package is delivered in other modes, the management nodes under the "Package" in the MO and their subnodes are generated by the terminal. The values of the nodes such as PackageID, Default, and Modifiable may be obtained from the corresponding elements of the configuration package. The value of the State node depends on the state of the configuration package after installation of the Descriptor. If the Descriptor includes no corresponding content, the terminal sets the value of the State node to the default value.

The nodes under "Operation" are Install, Active, Deactive, Lock, Unlock, and Remove, and are operation interfaces of the terminal as against the DMS. If the management nodes and their subtree under "Package" are generated by the terminal, the nodes generated under "Operation" are decided by the terminal. If the terminal does not generate such nodes, the DMS has no interface for operating the configuration package. For example, if the terminal generates only the nodes such as Install, Active, Deactive, and Remove, the DMS may perform only such four operations, and maynot lock or unlock the package. If the DMS has the right of creating a subnode under the "Operation" node, the DMS may add more executable nodes under the "Operation" node in the subsequent management, and then operate the relevant nodes.

All the management nodes and their subtree under the "Element" node are created by the terminal. The method for granting the access control rights is: The value of the Access Control List (ACL) of the <Y> node inherits the ACL of the management nodes of the configuration package that includes the configuration element; and the ACL value of the executable nodes under "Operation" inherits the ACL value of the corresponding executable nodes under "Operation" under the management node of the configuration package that includes the configuration element.

Step 202: The terminal performs management operations for the configuration item, configuration package, and configuration element according to the received DM command.

### 1. Managing the configuration package

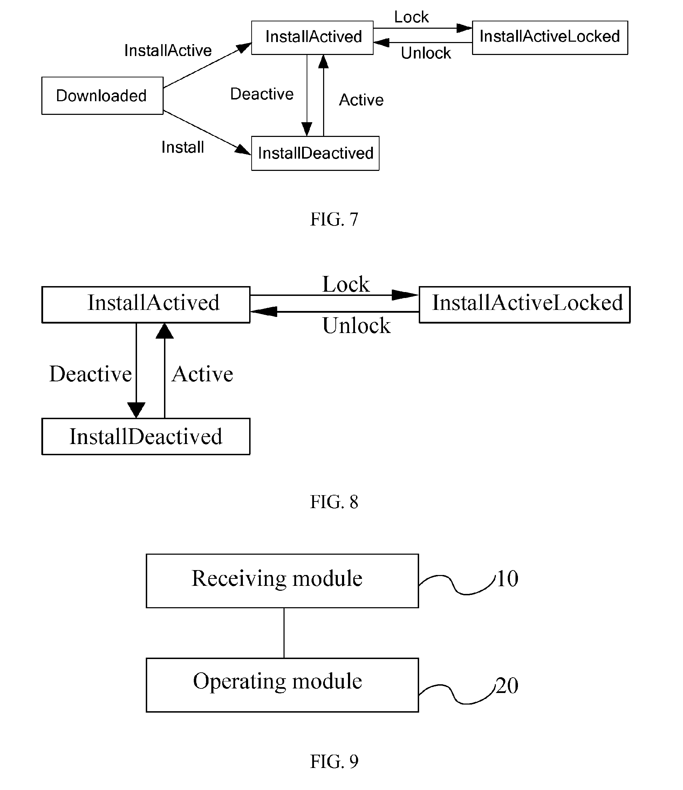

FIG. 7 shows state transition corresponding to management operations for configuration packages in the second embodiment of the terminal device configuration method under the present invention. The management operations include: Install, InstallActive, Remove, Active, Deactive, Lock, and Unlock. The DMS delivers the Exec command to the corresponding node to instruct the terminal to perform the corresponding operation. After receiving the command, the terminal performs the relevant operations, and updates the configuration package state. The configuration package state value is recorded on the "State" node. Possible state values include: Downloaded, InstallActived, InstallDeactived, and InstallActivedLocked.

After executing the Unlock command, the terminal updates the state of the configuration package to the InstallActived state.

After receiving the Active command, the terminal activates all configuration elements under the configuration package. Specifically, the terminal finds all configuration elements that belong to this Package according to the value of the pkgRef node under the configuration element management node, and then sets the ActivedRef of the corresponding configuration item to the ElementID of the configuration element.

In order to set the configuration package to default or "non-modifiable", the DMS uses a Replace command to change the value of Default and Modifiable on the MO. Given below is an example of the Replace command:

```
       <Replace>
       <CmdID>4</CmdID>
       <Item>
       <Target>
       <LocURI>/LFC/Package/<X>/Modifiable </LocURI>
       </Target>
       <Data>true</Data> <!-value of Modifiable-->
       </Item>
       </Replace>
```

If the DMS changes the value of the Modifiable node to "true", the terminal sets the configuration package to "modifiable", and sets the value of the "Modifiable" node of the configuration package on the configuration package management subtree and the configuration element in the configuration package to "true". If the DMS changes the value of the Modifiable node to "false", the terminal sets the configuration package to "non-modifiable", and sets the value of the "Modifiable" node of the configuration package on the configuration package management subtree and the configuration element in the configuration package to "false".

If the DMS changes the value of the Default node to "true", the terminal sets the configuration package to default; if the DMS changes the value of the Default node to "false", the terminal sets the configuration package to non-default.

After the terminal executes the command delivered by the DMS, if the state of the configuration package changes, the value of the State node under the configuration package management node also changes in order to reflect the state of the configuration package. The change of the State node value complies with the state transition chart of the configuration package.

### 2. Managing the configuration elements

FIG. 8 shows state transition corresponding to management operations on configuration elements in the second embodiment of the terminal device configuration method under the present invention. The management operations include: Lock, Unlock, Remove, Active/Deactive, Default/Non-default, and Modifiable/Non-modifiable. The DMS modifies the ActivedRef node value of the corresponding configuration item to implement the Active/Deactive operation for the configuration elements, as detailed below:

For the operations of Lock, Unlock, and Remove, the DMS delivers the operation to the terminal through an Exec command. The LocURI element in the command is the path of the corresponding command under the Operation node of the configuration element to be managed.

After the terminal receives the Exec command for the Lock node, if the configuration element is in the activated state, the terminal locks the configuration element directly; if the configuration element is in the inactive state, the locking operation fails, and the terminal returns the locking failure result to the DMS. The terminal may also activate the configuration element first, and then lock the configuration element. That is, before the configuration element is unlocked, neither the server nor the terminal may change the configuration of the configuration item.

After the terminal receives the exec command for the Unlock node, if the configuration element is in the locked state, the terminal unlocks the configuration element; if the configuration element is in the unlocked state, the terminal performs no operation, and returns an operation failure result to the DMS.

After receiving the exec command for the Remove node, the terminal deletes the configuration element. If the element is in the activated state, the terminal deletes the configuration element and sets the configuration item that covers the configuration element to the default value.

If the DMS wants to set the configuration element to the default value or the activated state, the DMS may use a Replace command to change the value of the /LFC/Element/<X>/DefaultRef and ActivedRef under the MO to the ElementID which requires setting to default or requires activation. The value of the ElementID is carried by the Item/Data element of the Replace command, as detailed below:

```
       <Replace>
       <CmdID>6</CmdID>
       <Item>
       <Target>
       <LocURI>/LFC/Element/<X>/DefaultRef </LocURI>
       </Target>
       <Data>ele1234</Data> <!-ElementID of configuration element to be set to default
       -->
       </Item>
       </Replace>
```

The terminal executes the command. If the Replace command is intended for the DefaultRef node, the terminal changes the value of the /LFC/Element/<X>/DefaultRef node to the ElementID value carried in the command, and sets the configuration element identified by the ElementID to the default value of the configuration item. If the Data element value in the Replace command is null, the terminal sets the configuration element, which is originally covered by this configuration item and originally set to the default value, to non-default, and the default value of the configuration item is specified by the terminal.

If the Replace command is intended for the ActivedRef node, the terminal changes the value of the /LFC/Element/<X>/ActivedRef node to the ElementID value carried in the command, and activates the configuration element identified by the ElementID.

If the Data element value in the Replace command is null, the terminal sets the currently active configuration element which is originally covered by the configuration item to the inactive state, and the currently active element of the configuration item is specified by the terminal.

In order to set a configuration element to "non-modifiable", the DMS uses a Replace command to change the value of the "/LFC/Element/<X>/ AvailableList/<Y>/ Modifiable" on the MO to "false".

After the terminal executes the command delivered by the DMS, if the state of the configuration element changes, the value of the "State" node under the configuration element management node also changes in order to reflect the state of the configuration element. The change of the State node value complies with the state transition chart of the configuration element.

In this embodiment, the LFC configuration package delivered to the terminal may be mapped to the MO of the terminal, and therefore, an interface is available for the DMS to manage the MO subsequently. After the configuration package is delivered to the terminal, the configuration package may be mapped to the MO of the terminal before installation or after installation.

In the third embodiment of the terminal device configuration method under the present invention, the LFC configuration package is mapped to the MO of the terminal before installation. The terminal creates management nodes and their management subtree under the LFC/Package node for the configuration package. The detailed configuration method is the same as the second embodiment of the terminal device configuration method except that the configuration package is placed under the LFC/Package/<X>/Data of the MO.

In the fourth embodiment of the terminal device configuration method under the present invention, the LFC configuration package is mapped to the MO of the terminal after installation. If the configuration package has no corresponding management subtree on the MO, the terminal creates management nodes and their management subtree under the LFC/Package node on the MO for the configuration package. The detailed configuration method is the same as the second embodiment of the terminal device configuration method. For the information of the configuration package, the method for mapping the information to the corresponding node of the management subtree includes one or more of the following steps:
If the information of the configuration package includes a PackageID element, the terminal assigns the value of the PackageID element to the PackageID node under the management subtree.

If the Descriptor element includes a Modifiable element, the terminal assigns the value of the Modifiable element to the Modifiable node under the management subtree.

If the Descriptor element includes an Actived element and its value is "true, and if the Operation subnode of the management node has no Active node or Deactive node which is executable, the terminal creates the executable Active node and Deactive node under the Operation node.

If the Descriptor element includes a Default value, the terminal assigns the value of the Default element to the Default node under the management subtree.

If the Descriptor element includes an AuthPolicy element which includes one or more management server IDs, the terminal allocates access control rights to the management server. Specifically, the terminal allocates the access control rights of the management node to the management server. For example, if the ACL of the management nodes needs to include Get=ServerID, or Delete=ServerID, or Replace=ServerID, or Add=ServerID, and/or allocate the executable right of the executable node under the Operation node to the management servers, and specifically, if the ACL of the executable nodes needs to include exec=ServerID; when the AuthPolicy includes multiple server IDs, the ACL value of the management node is like: Replace= Server1+Server2+...+ServerN; and the ACL of the executable nodes under the Operation node is set to exec=Server1+Server2+...+ServerN. If the management server ID under the AuthPolicy is *, the * indicates that any management server is entitled to manage the configuration package and the configuration element subsequently, and therefore, the ACL of the management node needs to include Get=*, or Delete=*, or Replace=*, or Add=*, and/or the ACL of the executable node under the Operation node needs to include exec=*.

After the terminal installs the configuration package, if the state of the configuration package is InstallActived, InstallDeactived, or InstallActiveLocked, the terminal assigns the state value of the configuration package to the LFC/Package/<X>/State node of the management subtree.

If the Descriptor/ElementSet element includes one or more "Element" elements, where each "Element" represents a configuration element, namely, if the configuration information includes an ID related to the configuration element, the terminal matches the value of the ElementType element under the "Descriptor/ElementSet/Element" element with the value of the "LFC/Element/<X>/ElementType" on the MO of the terminal, finds the management node <X> corresponding to the configurable item that covers the configuration element on the MO, and creates a management node <Y> for the configuration element under the AvailableList node of the management node. The ACL value of the <Y> node inherits the ACL value of the management node of the configuration package that covers the configuration element.

If the "Element" element in the Descriptor file includes an "ElementID" element, the terminal creates an ElementID node under this management node, and assigns the value of the "ElementID" element under the "Element" element to the ElementID node.

If the "Element" element includes a "Modifiable" element, the terminal creates a Modifiable node under this management node, and assigns the value of the "Modifiable" element under the "Element" element to the Modifiable node.

If the "Element" element includes an Actived element and its value is "true", the terminal modifies the ActivedRef value under the configuration item to the value of the "ElementID" element under the "Element" element.

If the "Element" element includes a Default element and its value is "true", the terminal modifies the DefaultRef value under the configuration item to the value of the "ElementID" element under the "Element" element.

After the terminal installs the configuration package, if the state of the configuration element in the configuration package is InstallActived, InstallDeactived, or InstallActiveLocked, the terminal assigns the state value of the configuration element to the State node under the configuration element management subtree.

The ACL of the management node <Y> inherits the ACL value of the management node <X> of the configuration package that covers the configuration element.

The ACL value of the executable node under "Operation" under the management node <Y> inherits the ACL value of the corresponding executable node under the "Operation" node under the management node <X> of the configuration package that covers the configuration element.

In this embodiment, the Descriptor file carries customized configuration information about whether to set the configuration package to "non-modifiable", whether to set the configuration package to "active", whether to set the configuration package to default, and the configuration package is customized after being installed on the terminal. An Application ID identifies the LFC client, and a MIME type identifies the configuration package type so that the LFC configuration package may be delivered through various mechanisms. An MO is applied to perform remote management for the configuration package, configuration item, and configuration element in the customized configuration of the terminal. A method of mapping from the configuration package to the MO is provided so that the configuration package delivered to the terminal is manageable subsequently, and the DMS rights may be authenticated. Therefore, the customized properties of the terminal are configured and managed through the network.

Further, the operation rights of the DMS may be authenticated after the foregoing device management instructions are received, as detailed below.

After receiving an instruction of setting the configuration package and/or configuration element to "non-modifiable", the terminal executes the command, and records the server ID of the DMS. After receiving an instruction of setting the configuration package and/or configuration element to "modifiable", the terminal judges whether the ID of the DMS which delivers the instruction of setting to "Non-modifiable" is the same as the ID of the DMS which delivers the instruction of setting to "Modifiable", and executes the instruction if the ID is the same or rejects to execute the instruction if the ID is not the same.

After receiving an instruction of locking the configuration package and/or configuration element, the terminal executes the command, and records the server ID of the DMS. After receiving an instruction of unlocking the configuration package and/or configuration element, the terminal judges whether the ID of the DMS which delivers the instruction of locking is the same as the ID of the DMS which delivers the instruction of unlocking, and executes the instruction if the ID is the same or rejects to execute the instruction if the ID is not the same. FIG. 9 is a structure of an apparatus for configuring a terminal device in the first embodiment of present invention. The apparatus in this embodiment includes a receiving module 10 and an operating module 20 which are interconnected. The receiving module 10 is adapted to receive a configuration package that carries customized configuration information; and the operating module 20 is adapted to perform management operation for the configuration package according to the customized configuration information.

The customized configuration information includes one or more of these items: PackageID, AuthPolicy, ServerID, an indicator that indicates whether to set the configuration package to "non-modifiable", an indicator that indicates whether to set the configuration package to "Actived", an indicator that indicates whether to set the configuration package to default, an indicator that indicates whether the user needs to confirm (NeedUserConfirm), ElementID, an identifier of the configuration element (ElementType), source file (src), an indicator that indicates whether to set the configuration element to "non-modifiable", an indicator that indicates whether to set the configuration element to "Actived", and an indicator that indicates whether to set the configuration element to default.

In this embodiment, the configuration package received by the receiving module carries the customized configuration information about whether to set the configuration package to the non-modifiable state, whether to set the configuration package to the active state, and whether to set the configuration package to default; and, according to the customized configuration information, the operating module configures and manages customized properties of the terminal through the network.

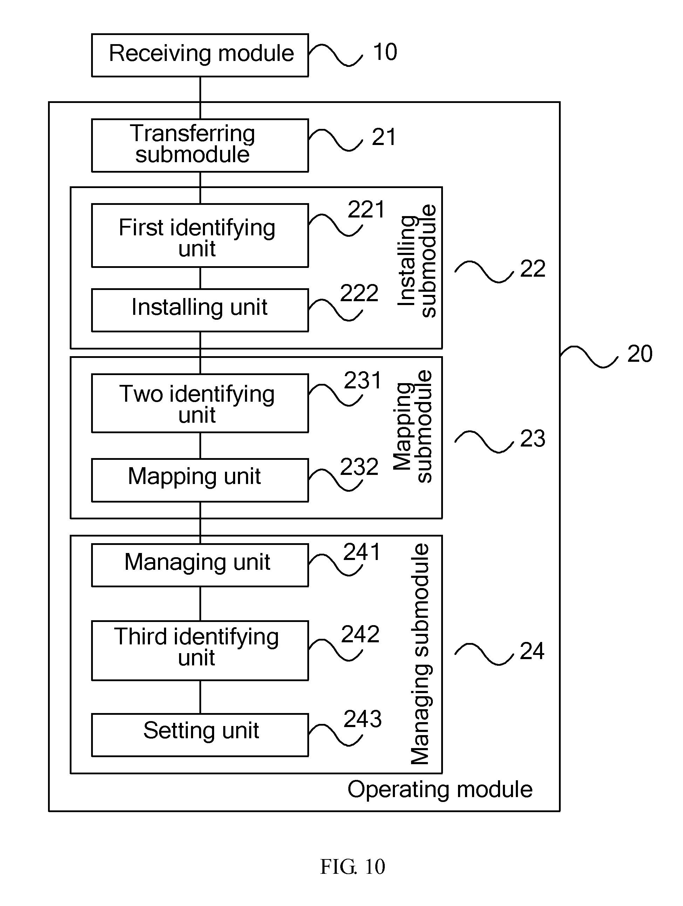

FIG. 10 is a structure of an apparatus for configuring a terminal device in the second embodiment of present invention. On the basis of the foregoing embodiment, the operating module 20 in this embodiment may include a transferring submodule 21 and an installing submodule 22 which are interconnected. The transferring submodule 21 is connected with the receiving module 10, and is adapted to transfer the configuration package received by the receiving module 10. The installing submodule 22 is adapted to install the configuration package according to the customized configuration information carried in the configuration package after receiving the configuration package.

The installing submodule 22 may further include a first identifying unit 221 and an install unit 222 which are interconnected. The first identifying unit 221 is connected with a transferring submodule 21 and adapted to identify the configuration information carried in the configuration package; and the installing unit 222 is connected with the transferring submodule 21 and adapted to install the configuration package, and set the installed configuration package according to the identification result of the first identifying unit 221. The setting method is detailed below:
If the configuration package carries an indicator that indicates whether to set the configuration package to "non-modifiable", and if the value of the indicator that indicates whether to set the configuration package to "non-modifiable is to set the configuration package to "non-modifiable", after installing the configuration package, the installed configuration package is set to "non-modifiable"; if the value of the indicator that indicates whether to set the configuration package to "non-modifiable" is to set the configuration package to "modifiable", after installing the configuration package, the installed configuration package is set to "modifiable";

If the configuration package carries an indicator that indicates whether to set the configuration package to the active state, and if the value of the indicator that indicates whether to set the configuration package to the active state is to set the configuration package to the active state, after installing the configuration package, the installed configuration package is set to the active state; if the value of the indicator that indicates whether to set the configuration package to the active state is to set the configuration package to the inactive state, after installing the configuration package, the installed configuration package is set to the inactive state;

If the configuration package carries an indicator that indicates whether to set the configuration package to default, and if the value of the indicator that indicates whether to set the configuration package to default is to set the configuration package to default, after installing the configuration package, the installed configuration package is set to default; if the value of the indicator that indicates whether to set the configuration package to default is to set the configuration package to non-default, after installing the configuration package, the installed configuration package is set to non-default;

If the configuration package carries an indicator that indicates whether user confirmation is required, and if the value of the indicator whether user confirmation is required is to remind the user to confirm, during in an installation process the user is reminded to confirm;

If the value of the indicator whether user confirmation is required is to remind the user through a message, during in the installation process only a message is sent as a reminder; if the value of the indicator whether user confirmation is required is to allow the user to modify, during the installation process the user is allowed to modify; if the value of the indicator whether user confirmation is required is not to remind the user to confirm, during the installation process the user is not reminded to confirm;

If the configuration package carries an indicator that indicates whether to activate the configuration element, and if the value of the indicator that indicates whether to activate the configuration element is to activate the configuration element, the corresponding configuration element is set to the active state after installing the configuration package; if the value of the indicator that indicates whether to activate the configuration element is to set the configuration element to the inactive state, the corresponding configuration element is set to the inactive state after installing the configuration package;

If the configuration package carries an indicator that indicates whether to set the configuration element to "non-modifiable", and if the value of the indicator that indicates whether to set the configuration element to "non-modifiable" is to set the configuration element to "non-modifiable", the corresponding configuration element is set to "non-modifiable" after installing the configuration package; if the value of the indicator that indicates whether to set the configuration element to "non-modifiable" is to set the configuration element to "modifiable", the corresponding configuration element is set to "modifiable" after installing the configuration package; and

If the configuration package carries an indicator that indicates whether to set the configuration element to default, and if the value of the indicator that indicates whether to set the configuration element to default is to set the configuration element to default, the corresponding configuration element is set to default after installing the configuration package; if the value of the indicator that indicates whether to set the configuration element to default is to set the configuration element to non-default, the corresponding configuration element is set to non-default after installing the configuration package.

Further, the operating module 20 in this embodiment further includes a mapping submodule 23, which is connected with the installing submodule 22 and adapted to: map the configuration package to the data node of the MO before the installing submodule 22 installs the configuration package; or map the configuration information, the state of the configuration package, and the operation rights of the configuration package in the configuration package to the corresponding node of the MO after the installing submodule 22 installs the configuration package. For the latter, the mapping submodule 23 may further include: the second identifying unit 231 and the mapping unit 232 which are interconnected. The second identifying unit 231 is connected with the transferring submodule 21 and the installing unit 222, and is adapted to identify the configuration information carried in the configuration package after the installing unit 222 finishes installing the configuration package. The mapping unit 232 is adapted to map the information in the configuration package to the corresponding node of the MO according to the identification result of the second identifying unit 231.

The mapping unit 232 may further include: a mapping subunit, a first setting subunit, and a second setting subunit. The mapping subunit is connected with the second identifying unit, and is adapted to map the value of the ID carried in the configuration package to the corresponding node under the management subtree of the configuration package on the MO according to the identification result of the second identifying unit. The first setting submodule is connected with the second identifying unit, and is adapted to: set the default reference node and the activated reference node according to the identification result of the second identifying unit, and set the state node under the configuration package and/or management subtree. The second setting subunit is connected with the second identifying unit and adapted to set the access control rights of the MO according to the identification result of the second identifying unit. The detailed setting method may be:
If the configuration package carries an indicator that indicates whether to set the configuration package to default, the mapping subunit assigns the value of the indicator to the node which sets the configuration package to default under the configuration package management subtree.

If the configuration package carries an indicator that indicates whether to set the configuration package to "non-modifiable", the mapping subunit assigns the value of the indicator to the node which sets the configuration package to "non-modifiable" under the configuration package management subtree.

If the configuration package carries an indicator that indicates whether to remind the user to confirm, the mapping subunit assigns the value of the indicator to the node which has the indicator of reminding the user to confirm under the configuration package management subtree.

If the configuration package carries a configuration package identifier, the mapping subunit assigns the value of the identifier to the node with the configuration package identifier under the configuration package management subtree.

After the terminal installs the configuration package, if the state of the configuration package is InstallActived, InstallDeactived, or InstallActiveLocked, the terminal assigns the state value of the configuration package to the State node of the configuration package management subtree.

If the configuration package carries an indicator that indicates whether to set the configuration element to default, and if the value of the indicator is to set the configuration package to default, the first setting subunit assigns the corresponding element identifier to the default reference node.

If the configuration package carries an indicator that indicates whether to set the configuration element to the active state, and if the value of the indicator is to activate the configuration element, the first setting subunit assigns the corresponding element identifier to the activated reference node.

If the configuration package carries an indicator that indicates whether to set the configuration element to "non-modifiable", the mapping subunit assigns the value of the identifier to the node which sets the configuration element to "non-modifiable" under the configuration element management subtree.

After the terminal installs the configuration package, if the state of the configuration element in the configuration package is InstallActived, InstallDeactived, or InstallActiveLocked, the terminal assigns the state value of the configuration element to the State node under the configuration element management subtree.

If the configuration package carries an authentication policy, the second setting subunit sets the MO access control rights for the management server according to the authentication policy.

Further, the operating module 20 in this embodiment may further include a managing submodule 24. The managing submodule 24 is connected with the installing submodule 22, and is adapted to execute the device management instruction after receiving the device management instruction delivered by the DMS. The device management instructions include:
an Install instruction (Install), an Install and Active instruction (InstallActive), an Active instruction (Active), a Deactive instruction (Deactive), a lock instruction (Lock), an unlock instruction (Unlock), a remove instruction (Remove), an instruction of setting to Modifiable or Nonmodifiabe (Modifiable), and and an instruction of setting to Default or Nondefault (Default) for the configuration package, or include an Active instruction (Active), a Deactive instruction (Deactive), a lock instruction (Lock), an unlock instruction (Unlock), an instruction of setting to Modifiable or Non-modifiabe (Modifiable), and an instruction of setting to Default or Nondefault (Default) for the configuration element.

Specifically, the management 24 may include a managing unit 241, a third identifying unit 242, and a setting unit 243, which are connected sequentially. The managing unit 241 is connected with the installing unit 222 and the mapping unit 232, and is adapted to execute the device management instruction delivered by the DMS after receiving the device management instruction. After the managing unit 241 executes the device management instruction, the state of the configuration package changes. The third identifying unit 242 is adapted to identify the state of the configuration package and/or configuration element after the managing unit 241 executes the device management instruction. The setting unit 243 is adapted to set the value of the state node according to the identification result of the third identifying unit 242. The detailed setting method may be:
If the configuration package is installed successfully, the setting unit 243 sets the value of the state node to "InstallDeactived".
If the configuration package is installed and activated successfully, the setting unit 243 sets the value of the state node to "InstallActived".
If the configuration package is activated successfully, the setting unit 243 sets the value of the state node to "InstallActived".
If the configuration package is deactivated successfully, the setting unit 243 sets the value of the state node to "InstallDeactived".
If the configuration package is locked successfully, the setting unit 243 sets the value of the state node to "InstallActiveLocked".
If the configuration package is unlocked successfully, the setting unit 243 sets the value of the state node to "InstallActived".
If the configuration element is activated successfully, the setting unit 243 sets the value of the state node to "InstallActived".
If the configuration element is deactivated successfully, the setting unit 243 sets the value of the state node to "InstallDeactived".
If the configuration element is locked successfully, the setting unit 243 sets the value of the state node to "InstallActiveLocked".
If the configuration element is unlocked successfully, the setting unit 243 sets the value of the state node to "InstallActived".

In the embodiments of the present invention, the configuration package received by the receiving module carries the customized configuration information about whether to set the configuration package to the non-modifiable state, whether to set the configuration package to the active state, and whether to set the configuration package to default, the operating module 20 implements customized configuration and management for the configuration package installed on the terminal, thus configuring and managing customized properties of the terminal through the network.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

Although the invention is described through some exemplary embodiments, the invention is not limited to such embodiments. It is apparent that those skilled in the art may make modifications and variations to the invention.

## Claims

1. A method for configuring a terminal device, **characterized in** comprising:
receiving, a configuration package that carries customized configuration information; and
installing, the configuration package according to the customized configuration information.

2. The method of claim 1, **characterized in that**,
the customized configuration information comprises at least one of: a package identifier, an authentication policy, an indicator that indicates whether to set the configuration package to "non-modifiable", an indicator that indicates whether to set the configuration package to the active state, an indicator that indicates whether to set the configuration package to default, an indicator that indicates whether user confirmation is required, an identifier of configuration element, an identifier of configuration element type, a source file, an indicator that indicates whether to set the configuration element to "non-modifiable", and an indicator that indicates whether to activate the configuration element or an indicator that indicates whether to set the configuration element to default.

3. The method of claim 2, **characterized in that**, before receiving a configuration package that carries customized configuration information, the method comprises:
organizing, the customized configuration information into a descriptive file, and encapsulating, configuration content file and the descriptive file into a package; or
organizing, the customized configuration information into a descriptive file, and putting, configuration content file into the descriptive file for packaging.

4. The method of claim 2 or 3, **characterized in that**, the installing the configuration package comprises at least one step of:
if the configuration package carries an indicator that indicates whether to set the configuration package to "non-modifiable", and if the value of the indicator that indicates whether to set the configuration package to "non-modifiable is to set the configuration package to "non-modifiable", after installing the configuration package, the installed configuration package is set to "non-modifiable"; if the value of the indicator that indicates whether to set the configuration package to "non-modifiable" is to set the configuration package to "modifiable", after installing the configuration package, the installed configuration package is set to "modifiable";
if the configuration package carries an indicator that indicates whether to set the configuration package to the active state, and if the value of the indicator that indicates whether to set the configuration package to the active state is to set the configuration package to the active state, after installing the configuration package, the installed configuration package is set to the active state; if the value of the indicator that indicates whether to set the configuration package to the active state is to set the configuration package to the inactive state, after installing the configuration package, the installed configuration package is set to the inactive state;
if the configuration package carries an indicator that indicates whether to set the configuration package to default, and if the value of the indicator that indicates whether to set the configuration package to default is to set the configuration package to default, after installing the configuration package, the installed configuration package is set to default; if the value of the indicator that indicates whether to set the configuration package to default is to set the configuration package to non-default, after installing the configuration package, the installed configuration package is set to non-default;
if the configuration package carries an indicator that indicates whether user confirmation is required, and if the value of the indicator whether user confirmation is required is to remind the user to confirm, during in an installation process the user is reminded to confirm;
if the value of the indicator whether user confirmation is required is to remind the user through a message, during in the installation process only a message is sent as a reminder; if the value of the indicator whether user confirmation is required is to allow the user to modify, during the installation process the user is allowed to modify; if the value of the indicator whether user confirmation is required is not to remind the user to confirm, during the installation process the user is not reminded to confirm;
if the configuration package carries an indicator that indicates whether to activate the configuration element, and if the value of the indicator that indicates whether to activate the configuration element is to activate the configuration element, the corresponding configuration element is set to the active state after installing the configuration package; if the value of the indicator that indicates whether to activate the configuration element is to set the configuration element to the inactive state, the corresponding configuration element is set to the inactive state after installing the configuration package;
if the configuration package carries an indicator that indicates whether to set the configuration element to "non-modifiable", and if the value of the indicator that indicates whether to set the configuration element to "non-modifiable" is to set the configuration element to "non-modifiable", the corresponding configuration element is set to "non-modifiable" after installing the configuration package; if the value of the indicator that indicates whether to set the configuration element to "non-modifiable" is to set the configuration element to "modifiable", the corresponding configuration element is set to "modifiable" after installing the configuration package; and
if the configuration package carries an indicator that indicates whether to set the configuration element to default, and if the value of the indicator that indicates whether to set the configuration element to default is to set the configuration element to default, the corresponding configuration element is set to default after installing the configuration package; if the value of the indicator that indicates whether to set the configuration element to default is to set the configuration element to non-default, the corresponding configuration element is set to non-default after installing the configuration package.

5. The method of claim 3, **characterized in that**, after the packaging, and before receiving a configuration package that carries customized configuration information, the method comprises:
identifying, a look and feel customization client through an application identifier, and delivering the configuration package through PUSH OTA; or
identifying, a type of the configuration package through a Multipurpose Internet Mail Extensions type, and delivering the configuration package through Download OTA; or
creating, a management subtree of the configuration package on a Management Object, MO, of the terminal, and delivering the configuration package in the DM mode.

6. The method of claim 1, **characterized in that**, after receiving a configuration package that carries customized configuration information, and before installing the configuration package, the method comprises:
creating, a configuration package management node and a subtree of the configuration package management node on the terminal management tree; and
mapping, the configuration package to the data nodes of the subtree of the configuration package management node on the terminal management tree.

7. The method of claim 1, **characterized in that**, after installing the configuration package, the method comprises:
creating, a configuration package management node and a subtree of the configuration package management node on the terminal management tree;
creating, a configuration element management node and a subtree of the configuration element management node on the terminal management tree, if the configuration information comprises an identifier related to the configuration element; and
mapping, the installed configuration information of configuration package configuration information to corresponding nodes of the subtree of the configuration package management node on the terminal management tree.

8. The method of claim 7, **characterized in that**, the mapping the installed configuration information of configuration package configuration information to corresponding nodes of the subtree of the configuration package management node on the terminal management tree comprises but is not limited to at least one step of:
assigning, a state value of the configuration package to a State node under the configuration package management subtree;
assigning, a state value of a configuration element to a State node under the configuration element management subtree;
assigning, a value of an indicator that indicates whether to set the configuration element to default to a node, which sets the configuration package to default, under the configuration element management subtree, if the configuration package carries the indicator that indicates whether to set the configuration element to default;
assigning, a value of an indicator that indicates whether to set the configuration package to "non-modifiable" to a node, which sets the configuration package to "non-modifiable" under the configuration element management subtree, if the configuration package carries the indicator that indicates whether to set the configuration package to "non-modifiable";
assigning, a value of an indicator that indicates whether to remind a user to confirm to a node, which has the indicator of reminding the user to confirm, under the configuration package management subtree, if the configuration package carries the indicator that indicates whether to remind the user to confirm;
assigning, a value of a configuration package ID node with the configuration package ID under the configuration package management subtree, if the configuration package carries a configuration package ID;
setting, an MO and a subnode of the MO, which are of the configuration package management subtree on the terminal device management tree, access control rights for the management server according to the authentication policy, if the configuration package carries an authentication policy;
assigning, a value of an indicator that indicates whether to set the configuration element to default to a default reference node, if the configuration package carries an indicator that indicates whether to set the configuration element to default and if the value of the indicator is to set the configuration package to default;
assigning, a value of an indicator that indicates whether to set the configuration element to the active state to a activated reference node, if the value of the indicator that indicates whether to set the configuration element to the active state is to activate the configuration element and if the value of the indicator is to activate the configuration element;
assigning, a value of an indicator that indicates whether to set the configuration element to "non-modifiable" to a node, which sets the configuration element to "non-modifiable", under the configuration element management subtree, if the configuration package carries the indicator that indicates whether to set the configuration element to "non-modifiable";

9. The method of claim 8, **characterized in that**, the
setting an MO and a subnode of the MO, which are of the configuration package management subtree on the terminal device management tree, access control rights for the management server according to the authentication policy specifically is:
allocating, access control rights the management node to a management server corresponding to a service identifier included by the authentication policy; and/or
allocating, an executable right of the executable node under the Operation node to the management server.

10. The method of claim 8 or 9, **characterized in that**, the method comprises:
an ACL value of the management node of the configuration element under the terminal device management tree inherits an ACL value of the management node of the configuration package that includes the configuration element; and/or
an ACL value of the executable node under the Operation node of the management node of the configuration element under the terminal device management tree inherits an ACL value of the executable node under the Operation node of the management node of the configuration package, wherein package includes the configuration element.

11. The method of claim 1, **characterized in that**, the method comprises:
managing, the configuration package and/or a configuration element of the configuration package.

12. The method of claim 11, **characterized in that**, the managing, the configuration package and/or a configuration element of the configuration package comprises:
receiving, an device management instruction of a DM server; and executing the device management instruction;
wherein the device management instruction comprises:
an Install instruction, an Install and Active instruction, an Active instruction, a Deactive instruction, a Lock instruction, an Unlock instruction, a Remove instruction, an instruction of setting to Modifiable or Nonmodifiabe, and an instruction of setting to Default or Nondefault for the configuration package, or
an Active instruction, a Deactive instruction, a Lock instruction, a Unlock instruction, an instruction of setting to Modifiable or Nonmodifiabe, and an instruction of setting to Default or Nondefault for the configuration element.

13. The method of claim 12, **characterized in that**, after executing the device management instruction, the status of the configuration package changes; and the method comprises,
executing the Install instruction of the configuration package, and setting the value of the state node to "InstallDeactived" if the configuration package is installed successfully;
executing the Install and Active instruction of the configuration package, and setting, the value of the state node to "InstallActived" if the configuration package is installed and activated successfully;
executing the Active instruction of the configuration package, and setting the value of the state node to "InstallActived" if the configuration package is activated successfully;
executing the Deactive instruction of the configuration package, and setting the value of the state node to "InstallDeactived" if the configuration package is deactivated successfully;
executing the Lock instruction of the configuration package, and setting the value of the state node to "InstallActiveLocked" if the configuration package is locked successfully; and
executing the Unlock instruction of the configuration package, and setting the value of the state node to "InstallActive" if the configuration package is unlocked successfully.

14. The method of claim 12 or 13, **characterized in that**, after executing the device management instruction, the status of the configuration element changes; and the method comprises,
executing the Active instruction of the configuration element, and setting the value of the state node to "InstallActived" if the configuration package is activated successfully;
executing the Deactive instruction of the configuration element, and setting the value of the state node to "InstallDeactived" if the configuration package is deactivated successfully;
executing the Lock instruction of the configuration element, and setting the value of the state node to "InstallActiveLocked" if the configuration package is locked successfully; and
executing the Unlock instruction of the configuration element, and setting the value of the state node to "InstallActive" if the configuration package is unlocked successfully.

15. The method of claim 12, **characterized in that**, after receiving the device management instruction, authenticating, an operation rights of the DM server, and authenticating an operation rights of the DM server specifically comprises:
executing, the instruction of setting the configuration package and/or configuration element to "non-modifiable", if receiving the instruction of setting the configuration package and/or configuration element to "non-modifiable", recording the server identifier of the DM server; judging, whether an the identifier of the DM server which delivers the instruction of setting to "Non-modifiable" is the same as an identifier of the DM server which delivers the instruction of setting to "Modifiable" after receiving the instruction of setting the configuration package and/or configuration element to "modifiable", and executing, the instruction of setting to "Modifiable" if the identifier of the DM server which delivers the instruction of setting to "Non-modifiable" is the same as the identifier of the DM server which delivers the instruction of setting to "Modifiable" ;
executing, the instruction of locking the configuration package and/or configuration element, if receiving an instruction of locking the configuration package and/or configuration element, recording the server identifier of the DM server; judging whether an identifier of the DMS which delivers the instruction of locking is the same as an identifier of the DM server which delivers the instruction of unlocking, after receiving the instruction of unlocking the configuration package and/or configuration element, and executing, the instruction of unlocking if the identifier of the DM server which delivers the instruction of locking is the same as an identifier of the DM server which delivers the instruction of unlocking.

16. An apparatus for configuring a terminal, **characterized in** comprising:
a receiving module, adapted to receive a configuration package that carries customized configuration information; and
an operating module, adapted to install the configuration package according to the customized configuration information.

17. The apparatus of claim 16, **characterized in that**, the operating module comprises:
a transferring submodule, adapted to transfer the configuration package received by the receiving module; and
an installing submodule, adapted to install the configuration package according to the customized configuration information after receiving the configuration package.

18. The apparatus of claim 17, **characterized in that**, the installing submodule comprises:
a first identifying unit, adapted to identify the configuration information carried in the configuration package; and
an install unit, adapted to install the configuration package, and set the installed configuration package according to an identification result of the first identifying unit.

19. The apparatus of claim 17, **characterized in that**, the operating module comprises:
a mapping submodule, adapted to map the configuration package to a data node of a Management Object, MO, or map the configuration information to a corresponding node of the MO.

20. The apparatus of claim 19, **characterized in that**, the mapping submodule comprises:
a second identifying unit, adapted to identify information of the configuration package, wherein the information of the configuration package comprises configuration information and the status of the configuration package; and
a mapping unit, adapted to map the information of the configuration package to a corresponding node of the MO according to an identification result of the second identifying unit.

21. The apparatus of claim 20, **characterized in that**, the mapping unit comprises:
a mapping subunit, adapted to map a value of an identifier carried in the configuration package to a corresponding node under a management subtree of the configuration package on the MO according to the identification result of the second identifying unit;
a first setting subunit, adapted to set a default reference node and an activated reference node according to the identification result of the second identifying unit, and set a state node under the configuration package and/or management subtree; and
a second setting subunit, adapted to set access control rights of the MO according to the identification result of the second identifying unit.

22. The apparatus of claim 16, **characterized in that**, the operating module comprises:
a managing submodule, adapted to execute a device management instruction after receiving the device management instruction delivered by the DM server;
wherein the device management instruction comprises:
an Install instruction, an Install and Active instruction, an Active instruction, a Deactive instruction, a Lock instruction, an Unlock instruction, a Remove instruction, an instruction of setting to Modifiable or Nonmodifiabe, and an instruction of setting to Default or Nondefault for the configuration package, or
an Active instruction, a Deactive instruction, a Lock instruction, a Unlock instruction, an instruction of setting to Modifiable or Nonmodifiabe, and an instruction of setting to Default or Nondefault for the configuration element.

23. The apparatus of claim 22, **characterized in that**, the managing submodule comprises:
a managing unit, adapted to execute the device management instruction delivered by the DM server after receiving the device management instruction;
a third identifying unit, adapted to identify a state of the configuration package and/or a configuration element; and
a setting unit, adapted to set a value of a state node of the configuration package and/or a configuration element according to an identification result of the third identifying unit.
